# EUROPEAN PATENT SPECIFICATION

(11) **EP 2 192 054 B1**
(45) Date of publication and mention of the grant of the patent: **23.08.2017**
(21) Application number: 07785213.5
(22) Date of filing: 31.07.2007
(51) Int. Cl.: B65D 90/40, F17C 13/12, A62C 3/06, B60K 15/077, B65D 90/32, A62C 4/02, B60K 15/03

(54) **AN EXPLOSION-PROOF MATERIAL AND A PREPARATION METHOD THEREOF**
EXPLOSIONSSICHERES MATERIAL UND HERSTELLUNGSVERFAHREN DAFÜR
MATÉRIAU ANTI-EXPLOSION ET PROCÉDÉ DE PRÉPARATION DE CELUI-CI

(43) Date of publication of application: 02.06.2010
(73) Proprietor: SHANGHAI HUAPENG EXPLOSION- PROOF SCIENCE AND TECHNOLOGY CO., LTD., Shanghai 200030 (CN)
(72) Inventor: HUANG, Xiaodong, Beijing 100-009 (CN)
(74) Representative: Intès, Didier Gérard André
(86) International application number: PCT/CN2007/002299
(87) International publication number: WO 2009/015514

(56) References cited:
- WO-A1-2004/091728
- DE-A1- 10 013 750
- DE-U1- 20 023 859
- JP-A- S5 494 503
- US-A- 4 925 053

## Description

### Field of the invention

The present invention relates to an explosion-proof material that may be safely used in the storage/transport container for flammable or explosive hazardous chemicals and its processing method, in particular, it relates to an explosion-proof separating material and its processing method.

### Description of the prior art

Conventionally , the storage/transport container for flammable and/or explosive chemicals in liquid or gaseous state is filled with a reticular explosion-proof material in order to prevent media combustion and/or explosion caused by unexpected events such as static, naked flame or gunshot etc.. As for the structure of the existing reticular explosion-proof materials, one form is a cylinder-shaped object, which is formed from rolled up reticular explosion-proof material, and which is fit into the storage/transport container piece by piece. The technical characteristics of this kind of explosion-proof material have been disclosed in patent ZL 92102437. This kind of rolled material, after being immersed in the medium of container for long term, tends to be deformed or collapse due to the mutual stacking and pressing between materials and the increased pressure at the lower part of the container; and thus the separating and explosion-resisting function of such reticular material can be severely diminished or even be invalidated. In such case, combustion and explosion may be easily triggered. Another form the conventional explosion-proof materials is an unit body comprising a framework prepared in advance; the unit is formed through filling up the framework with reticular explosion-proof materials and fixing them together; the units comes in various shapes and are fit into the storage/transport container for use. The technical characteristics of this kind of explosion-proof materials have been disclosed in patent ZL 200520017386. The disadvantages of such a unit are: It requires fabricating the framework in advance, which is long complex process, and such framework takes up significant volume of the storage/transport container, which is undesirable.

Additionally, the existing explosion-proof materials are mostly made of metallic materials, which is more liable to generated scrapes due to the rushing (so-called "surging" phenomena) of the liquid medium in the storage/transport container during the transportation process. Such phenomena is unavoidable because the stresses applied on the explosion-proof materials are irregular and the stresses on various parts of such materials are uneven; over long run it is easy to generate scraps, which may have adverse affects on the separating and explosion-resisting performances of the material and may even have certain undesirable influence on the properties of oil product. Meanwhile, most of the existing explosion-proof materials are made of whole piece metallic materials, which results in high manufacturing cost. Furthermore, the conventional explosion-proof materials made of metallic materials lack volume compressibility once they are shaped; it is very difficult to compress the volume of such materials to any degree, thus bringing about inconvenience for its storage and transportation.

Documents JP S54 94503 and DE 100 13 750 both disclose an explosion proof-material according to the preamble of claim 1.

### Summary of the invention

To overcome the deficiencies of the prior art, the first object of the present invention is to provide an explosion-proof material characterized by a skeleton, which is inserted in the gaps between any two adjacent layers of a multilayer high-porosity material such as to enhance the strength of the material body and effectively prevent the material body from collapsing and deforming.

The second object of the present invention is to provide an explosion-proof material characterized by a simple structure while achieving the safety, reliability and environment-friendliness of the storage/transport container.

The third object of the present invention is to provide an explosion-proof material which can effectively prevent metallic scraps and features a lower manufacturing cost.

The fourth object of the present invention is to provide an explosion-proof material partially made of compressible non-metallic material, so as to provide saved space for storage and thus bringing about increased convenience for storage and transportation.

The fifth object of the present invention is to provide a processing method for the explosion-proof material characterized of simple processing steps, short processing cycle, easy operation and high production efficiency. The objects of present invention are achieved through the features of claim 1. The explosion-proof material is made of a high-porosity material sheet, which is rolled up into a multilayer material body with one side edge of it as the center and along the direction perpendicular to this edge; A skeleton is inserted in the gaps between any two adjacent layers of this multilayer high-porosity material body so that the material body has adequate strength and elasticity.

According to different requirements, said skeleton may be designed in different structures. This skeleton may be formed by interweaving a carriage with a reinforcing ring. The reinforcing rings are stringed onto the carriage in parallels in the middle part of the carriage, the planar outline of which (while unrolled), may be an undulated line shape or an arrangement of rectangles; the shape of the skeleton varies corresponding to the shape of the material body. To guarantee that the skeleton has better supporting and reinforcing actions on the explosion-proof material, the skeleton should be made of elastic materials. In addition, the skeleton may also be made of metallic material, non-metallic material, composite material or materials obtained through metallic/non-metallic coating technology or their combinations. According to different requirements for the strength, the skeleton may be designed as a whole-piece continuous skeleton or discrete skeletons; the position(s) for inserting the skeleton may be selected as the entire gap between any two layers of this multilayer high-porosity material body or selected as multiple scattering places in the gaps.

In addition, for the convenience of processing, the skeleton may also be an assembled construction of columns and beams. The columns are inserted into the gaps in the material body and project out of the upper and lower end surfaces (two flat ends surfaces, hereinafter referred to as upper and lower surfaces) of the material body, and the beams shall be attached onto the columns after finishing inserting in the columns.

The skeleton may also be composed of more than one framework; these frameworks are deposited between any two adjacent layers of the multilayer material body, being mutually connected with each other at their top and bottom ends.

The skeleton may also be composed of two parts, the upper portion skeleton and the lower portion skeleton, each including the mutually connected end frame and insertion frame. Said end frames are deposited on the upper or lower end surfaces of the material body, and said insertion frames are inserted into the gaps between any two adjacent layers of the multilayer material body, so that the material body has adequate strength and elasticity.

According to different requirements of the different filling positions, the material body may be in the shape of rectangular parallelepiped, cubic or polygonal column.

At the same time, the high-porosity material body may be made of metallic material or alloy material or materials obtained through metallic/non-metallic coating technology or their combinations.

According to one embodiment of the present invention, the explosion-proof material provided by the present invention contains a core-body and a metal mesh wrapping the core-body completely or partially. The core-body is made of an expandable foam material, and a coating layer is further provided on the outside surface of the metal mesh.

According to another embodiment of the present invention, the explosion-proof material provided by the present invention comprises a core-body made of metal mesh, and the core-body is wrapped up with an expandable foam material.

Said expandable foam material may be polyether, poly-acid ester or polyurethane.

The present invention also provides a processing method for an explosion-proof material, which includes the following steps:
Step 1 : Forming a grid-form semi-finished material through cutting an arrangement of slits on an open-width foil material sheet;
Step 2 : Gradually expanding and stretching outwards both sides of the grid-form semi-finished material so as to obtain a high-porosity material sheet;
Step 3 : With one side edge of this high-porosity material sheet as the center, rolling up the material along the direction perpendicular to this side edge;
Step 4 : During the process of rolling up the high-porosity material sheet, inserting the skeleton into the gaps between any two adjacent layers of the material body; rolling up the material continually until it forms a cylinder with required diameter; cutting off the rest of the high-porosity material sheet so that the cylinder-shaped explosion-proof material is obtained.

The procedure of inserting the skeleton in said step 4 includes:
Step 4.1 : Conducting pre-expansion treatment on the skeletons of any of the structures described above;
Step4.2: Inserting the pre-expanded skeletons into the gaps of the high-porosity material body at one or multiple positions, in a continuous or discontinuous manner, spirally or otherwise.

The procedure of inserting the skeleton in multiple positions in step 4.2 includes: inserting only one type of the skeletons having one of the above described structures or inserting a mixture of said two kinds of skeletons.

The procedure of inserting the skeleton in said step 4 includes:
Step 4.1' : In the process of rolling up said high-porosity material sheet, inserting the columns at multiple positions in the material body in such way that the columns project out of the upper and lower end surfaces of the material body;
Step 4.2' :Attaching the beams onto the projected end parts of the columns in such way that the joint of them lands on the upper and lower end surfaces of the material body so as to form the properly inserted skeleton.

The procedure of inserting the skeleton in said step 4 also includes:
Step 4.1" : In the process of rolling up said high-porosity material sheet, inserting multiple frameworks at intervals and in certain angle with respect to each other in the gaps between any two layers of the multilayer material body.
Step 4.2" : Connecting the multiple frameworks with each other at their tops and bottoms so as to form properly inserted skeleton.

The certain angle in said step 4.1" is 45°-90°.

The procedure of inserting the skeleton in said step 4 further includes:
Step 4.1" : In the process of rolling up the high-porosity material sheet, inserting the upper and lower portions of the skeletons, each composed of mutually connected end frames and insertion frames. The end frames are deposited onto the upper and lower end surfaces of the material body, and the insertion frames are inserted into the gaps between any two layers of multilayer material body so that the material body has adequate strength and elasticity.

According to one aspect of the invention, the above processing method for the explosion-proof material may include the following steps:
Step 1 : Forming a grid-form semi-finished material through cutting an arrangement of slits on an open-width foil material;
Step 2 : Gradually expanding and stretching outwards both sides of the grid-form semi-finished material so as to obtain a high-porosity material sheet;
Step 3 :With one side edge of this high-porosity material sheet as the center, rolling up the material along the direction perpendicular to this side edge;
Step 4: After rolling up the material body to required extent, cutting off the remaining material sheet and inserting the skeleton in the gaps between any two layers of the cylinder material body so as to form the multilayer explosion-proof material.

According to one aspect of the present invention, the processing method for the explosion-proof material includes the following steps:
Step (1) : Forming a honeycomb structured core-body through performing reticulating process on the expandable foam material ;
Step (2) : Enwinding a metal mesh on the outside surface of the honeycomb structured core to form a desired explosion-proof material.

According to one aspect of the present invention, the processing method for the explosion-proof material includes the following steps:
Step (1'): Forming a honeycomb structured core-body through performing reticulating process on the expandable foam material ;
Step (2') : Enwinding a metal mesh on the outside surface of the honeycomb structured core-body to form the explosion-proof material.
Step (3') : Putting the material processed by said step (2') into a die, and wrapping up its outside surface with expandable foam material so as to form a coating layer; after shape forming, an explosion-proof material is obtained.

According to one aspect of the present invention, the processing method for the explosion-proof material includes the following steps:
Step (1") : Rolling up a sheet of metal mesh or overlaying multiple sheets of metal mesh one after another to form a core-body ;
Step(2") : Wrapping up the outside surface of the core-body with expandable foam material; after shape forming, an explosion-proof material is obtained.

The processing method for metal mesh : Cutting an arrangement of slits on a sheet of foil material to form a grid-form semi-finished material; Then, gradually expanding and stretching outward both sides of this grid-form semi-finished material so as to form a honeycomb structure, thus a porosity metal mesh is obtained.

The processing method for said metal mesh may also be as follows: Forming a multilayer laminated metallic material by mutually bonding the upper and lower surfaces of every two adjacent individual metallic sheets, the bonding points being set up at equal intervals in the transverse and longitudinal directions respectively; cutting out an arrangement of slits on the properly bonded multilayer metallic sheet, and expanding the multilayer material along the direction perpendicular to the cutting direction; the intervals between bonding points are expanded and voids are thus formed, in this manner a high-porosity metal mesh is obtained.

In conclusion, the present invention has the following favorable effects. The present invention adopts skeleton to support the body of the high-porosity material, and thus can effectively prevent the material body from collapsing and deforming. At the same time, metallic material and non-metallic materials are used in combination as the explosion-proof material so that the material resulted can achieve simple structure, easy processing and compressibility and thus can provide convenience and reduced space for storage and transportation. In brief, all the above favorable features ensure that the present invention can effectively prevent explosion initiated by naked flame, static electricity, welding, collision and faulty operation, and thus achieving safety, environment friendliness and the reliability as storage-transport container.

Further detailed description of the technical solution of the present invention will be given as follows with reference to the attached drawings and specific embodiments.

### Brief description of the drawings

Figure 1 is the overall structural representation of embodiment 1 of present invention;
Figure 2 is the planar structural representation of the elastic skeleton of embodiment 1 of present invention;
Figure 3 is the overall structural representation of the elastic skeleton of embodiment 1 of present invention;
Figure 4 is the expanded structural representation of the elastic skeleton of embodiment 2 of present invention;
Figure 5 is the overall structural representation of the elastic skeleton of embodiment 2 of present invention;
Figure 6 is the overall structural representation of embodiment 3 of present invention;
Figure 7 is the overall structural representation of embodiment 4 of present invention;
Figure 8 is the overall structural representation of embodiment 5 of present invention;
Figure 9 is the overall structural representation of embodiment 6 of present invention;
Figure 10 is the overall structural representation of embodiment 7 of present invention;
Figure 11 is the structural representation of the skeleton connection of embodiment 7 of present invention;
Figure 12 is the overall structural representation of embodiment 8 of present invention;
Figure 13 is the structural representation of the skeleton connection of embodiment 8 of present invention;
Figure 14 is the structural representation of the skeleton of embodiment 9 of present invention;
Figure 15 is the structural representation of the end surface of embodiment 10 of present invention;
Figure 16 is the structural representation of the end surface of embodiment 11 of present invention;
Figure 17 is the overall structural representation of embodiment 13 of present invention;
Figure 18 is the schematic diagram of the bonding of the multilayer open-width foil material of embodiment 13 of present invention;
Figure 19 is the schematic diagram of setting up bonding points on each piece of the open-width foil material of embodiment 13 of present invention;
Figure 20 is the structural representation and the cutting position after bonding of the multilayer open-width foil material of embodiment 13 of present invention ;
Figure 21 is the structural representation of the metal mesh of embodiment 13 of present invention.

### Detailed description of the preferred embodiments

### Embodiment 1

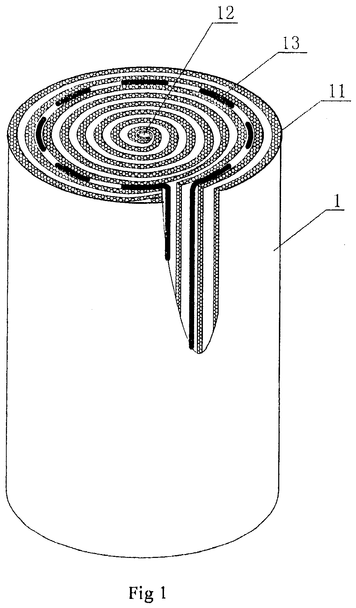

Figure 1 is the overall structural representation of embodiment 1 of the present invention. As shown in Figure 1, the present invention provides an explosion-proof material composed of a high-porosity material sheet11, which is rolled up into a multilayer material body 1 with one side edge 12 of it as center along the direction perpendicular to this side edge; A skeleton 13 is inserted in the gaps between any two layers of the multilayer material body 1 so as to enable the material body 1 having adequate strength and elasticity.

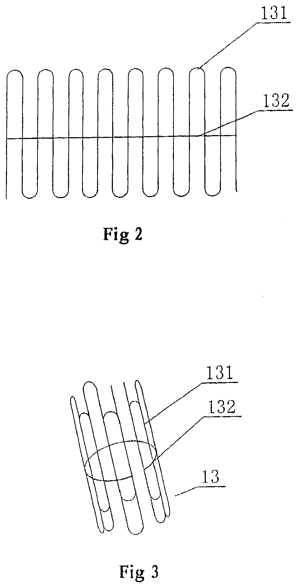

Figure 2 and 3 are respectively the planar structural representation of the flattened elastic skeleton, +and the overall structural representation of the rolled up elastic skeleton of embodiment 1 of the present invention. As shown in figures 2 and 3, in order to provide effective support on the material body, the skeleton 13 may be an elastic skeleton formed by interweaving the carriage 131 with the reinforcing ring 132; the reinforcing rings 132 are stringed in the middle of the carriage 131 and fixed onto it. As shown in figures 2 and 3, the carriage 131 in this embodiment has an undulate outline, which enables the carriage 131 to have adequate strength and elasticity. As shown in figure 3, the elastic skeleton may be designed as continuous skeleton or discontinuous skeleton. With reference to figure 1, in order to achieve preferable effect in practical application, it is also feasible to set up one or more skeletons 13 in the gaps between any two adjacent layers of the the material body 1 so as to increase the supporting effect.

In this embodiment, the processing procedure for skeleton 13 is as follows: bending with certain processing means a stick of spring steel into undulated shape so as to form the carriage 131; In the middle of the carriage, fixing a reinforcing ring 132 made of elastic material so as to form an undulated-line frame-worked mesh piece; Then, rolling this undulated-line frame-worked mesh piece into a cylinder so as to form the undulated-line frame-worked elastic skeleton 13,the cylindrical skeleton 13 having a diameter of ϕ50 -300 mm and a side length of 30 -50 mm. As shown in figures 2 and 3, the two outside edges of carriage 131 are straight sides, and the distance between them is 2.0 -5.0 mm generally. As a general rule, the diameter of the spring steel bar is 2.0 - 5.0 mm.

The processing procedures for the explosion-proof material provided in this embodiment mainly include: First cutting an arrangement of slits on the aluminum alloy foil so as to form a grid-form semi-finished material; Second, gradually expanding and stretching outward both sides of this grid-form semi-finished material so as to form the high-porosity material 11; Then, with one side edge 12 of this material sheet 11 as center, rolling up this material into cylindrical form along the direction perpendicular to this side edge. In the process of the rolling, inserting skeleton 13 into the high-porosity material 11; Continuing rolling the high-porosity sheet material to certain extent and cutting off the remaining material so as to form the new type explosion-proof material of this invention.

In this embodiment, the procedure for inserting the skeleton 13 is as follows: Conducting pre-expansion (shape adjustment prior to inserting) treatment on the skeleton 13 formed out of interweaved undulated-line frame-worked carriage 131 with the reinforcing ring 132 as shown in Figure 3, then inserting the pre-expanded skeleton 13 into the high-porosity material 11.

This structure taken by the present invention, in which the skeleton 13 supports the multilayer material body 1, can effectively prevent the material body 1 from collapsing and deforming; Meanwhile, featured by simple structure and easiness of processing, this material body 1 can effectively prevent explosion initiated by naked flame, static electricity, welding, gunshot, collision and faulty operation, thus achieving the safety, environmental friendliness and reliability of a storage/transport container. This explosion-proof material can suppress the volatilization of oil gas and thus effectively reduce oil loss and pollution of atmospheric environment caused by oil gas. According to statistics, after adopting improved explosion separating and preventing technology a medium-scale gas station with annual sales of 5000 ton can reduce oil loss by nearly 13 tons and save more than 70,000 RMB.

The fabrication of the explosion-proof material of the present invention involves using the cutting mechanism of a metal-mesh expanding machine to cut an arrangement of slits on the aluminum alloy foil to form the grid-form semi-finished product, which, after being reshaped, is further stretched and expanded using the metal-mesh expanding machine so as to form an high-porosity aluminum foil mesh piece, then such a mesh piece is rolled up and laminated to form the desired new type explosion-proof material. The technical characteristics of the cutting metal-mesh expanding machine used for the above fabricating process have been disclosed in the patent ZL02117070.3. Generally, the high-porosity material such obtained has a thickness of 0.02 - 0.2 mm and width of 50 - 800mm. The technical characteristics of the cylinder-shaped explosion-proof material formed thereof, have been disclosed in the patent ZL92102437.1. The cylindrical material body such obtained has a diameter of ϕ100 -300 mm. After being rolled up, the grid of each layer are interlaced and superimposed to one another in the same direction and a honeycomb structured amorphous porous structure is formed.

During the process of rolling up said high-porosity material, the undulated-line frame-worked skeleton 13 is adopted when it is necessary to insert the skeleton 13. The skeleton 13 is inserted from the side of high-porosity material body along the two outside straight side edge, in such way the skeleton 13 can be inserted into the gaps of the cylinder already formed. Then the skeleton 13 is rotated with the high porosity material so that the processed high-porosity material winds around and overlays over the skeleton 13 until a roll of required explosion-proof material is made.

### Embodiment 2

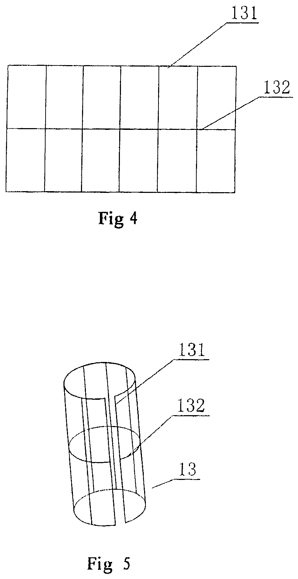

In practical applications, the carriage may be designed in multiple structures according to different requirements. As shown in Figure 4 and Figure 5, in this embodiment, the carriage 131 has a rectangle arrangement framework, and the reinforcing ring 132 is also stringed in the middle of the carriage 131. The carriage 131 and the reinforcing ring 132 are interweaved and fixed together to thus form the skeleton 13. As shown in Figures 4 and 5, in this embodiment, the skeleton 13 is formed according to the following procedure: Through processing, a stick of spring steel is bent into an arrangement of rectangles so as to form the carriage 131; in the middle of the carriage 131, fixing a reinforcing ring 132 made from elastic material and thus forming a rectangles-arrangement frame-worked mesh piece; Then, rolling up this frame piece into a cylinder and thus forming a rectangles-arrangement frame-worked elastic skeleton 13. The other technical characteristics of this embodiment are identical to those of embodiment 1, and unnecessary details will not be given herein.

It is necessary to note that, according to different requirements of the volume and shape of various containers, the material body 1 may be made into multiple shapes. In addition to the cylinder shape in above embodiment, it is also feasible to adopt other shapes such as rectangular parallelepiped, cubic and polygonal column. When a different shape is adopted for the material body 1, the shape of the skeleton 13 should be changed according to the shape of material body 1.

### Embodiment 3

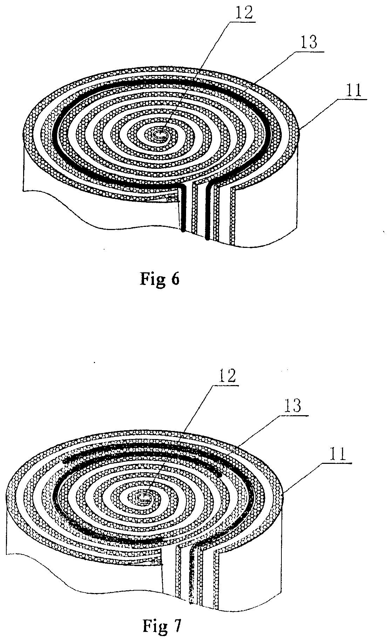

Figure 6 is the overall structural representation of embodiment 3 of present invention; As shown in Figure 6, in the practical applications, according to different requirements for strength, the skeleton 13 may be a continuous skeleton or a discontinuous skeleton; At the same time, to achieve preferable effect in practical applications, the skeleton 13 may be inserted at one position or multiple positions. In this embodiment, the skeleton 13 is a continuous skeleton, which wind for exactly one circle in an interlayer gap.

### Embodiment 4

As known from the procedures for inserting the skeleton 13 into the explosion-proof material of embodiment 1, the skeleton 13 may be inserted in the process of rolling up the high-porosity material body. Therefore, it is feasible to insert continuous skeletons varying in diameter and size in multiple interlayer gaps in the cylindrical material surrounding the circumferences thereof for a exact circle respectively, or to insert the discontinuous skeletons varying in diameter at multiple positions in the material body surrounding partially the circumferences of the cylinder so as to achieve preferable fixing and supporting effects. Figure 7 is the overall structural representation of embodiment 4 of present invention. As shown in Figure 7, in this embodiment, the skeletons 13 are discontinuous skeletons varying in diameter, which are inserted at multiple positions and surround partially the circumferences of the cylinder.

### Embodiment 5

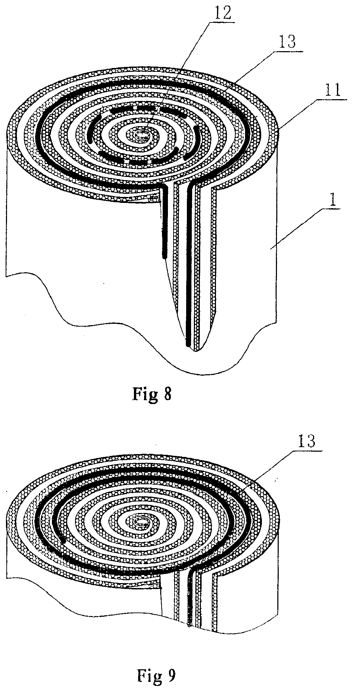

Figure 8 is the overall structural representation of embodiment 5 of present invention,; With reference to embodiment 1 and 2, as shown in Figures 2-5 and Figure 8, in this embodiment, the skeleton 13 with undulated-line frame-worked carriage 131 as in embodiment 1 is employed in combination with the skeleton 13 with rectangles-arrangement frame-worked carriage 131 as in embodiment 2. As shown in Figure 8, at the position near the center of material body 1, skeleton 13 with undulated-line frame-worked carriage 131 is inserted; at the position near the edge of material body 1, skeleton 13 with rectangles-arrangement frame-worked carriage 131 is inserted. Inserting two types of the skeletons in such manner can guarantee both the elasticity and rigidity of the material body 1 simultaneously.

### Embodiment 6

Figure 9 is the overall structural representation of embodiment 6 of present invention. As shown in Figure 9, in this embodiment, the skeletons 13 are continuous and helical skeletons, which are inserted between layers of the multilayer high-porosity material 11 of the material body 1. The helical crimp degree of the skeletons 13 is just adapted to the structure of the multilayer high-porosity material 11. Before inserting the skeletons 13, it is also necessary to conduct pre-expansion on the skeletons 13. The inserted skeletons 13 can shrink to some extent after being inserted, and their final shapes after being inserted correspond to the structure of the material body 1.

### Embodiment 7

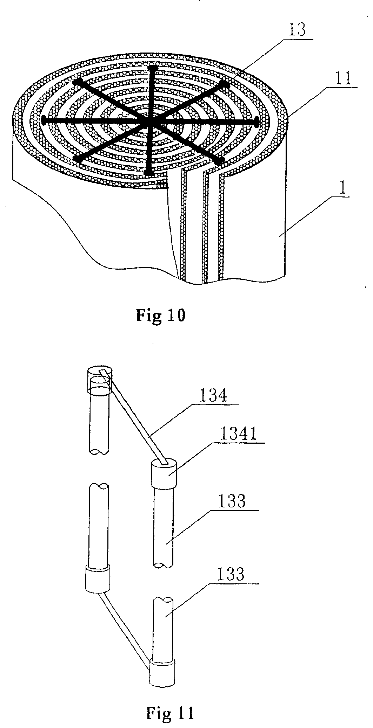

Figure 10 is the overall structural representation of embodiment 7 of present invention, and Figure 11 is the structural representation of the skeleton connection of embodiment 7 of present invention; as shown in Figures 10 and 11, for the convenience of processing, the skeleton 13 may be also designed as an assembled structure composed of columns 133 and beams 134. The columns 133 are inserted between any two adjacent layers of the multilayer material body 1 and project out of the upper and lower end surfaces of the material body 1, and the beams 134 are attached onto the projected end parts of the columns 133 in such way that their joints land on the upper and lower end surfaces of the material body 1. In this embodiment, the procedure for inserting the skeleton 13 includes: Firstly, during the process of rolling up said high-porosity material 11, columns 133 are inserted at multiple positions between any two adjacent layers of the multilayer projecting out of the upper and lower end surfaces of the material body 1; Then, attaching the beams 134 onto the columns in such way that their joints land on the upper and lower end surfaces of the material body 1 so as to complete the inserted skeleton 13.

Since the skeleton 13 is designed as such assembled structure in this embodiment, the procedure of conducting pre-expansion on the skeleton 13 as in the previous embodiment is avoided, thus the pretreatment step in the processing procedure is simplified. Meanwhile, at the time of using these explosion-proof units in other oil storage/transport devices, beams 134 can also be used for connecting multiple units in the same manner. This simple structure features light weight and low cost.

There can be multiple connection modes between the columns 133 and the beams 134. The connection mode shown in Figure 11 is merely a relatively simple and easy-to-manage mode among others. For example, an attachment cap 1341 may be provided on both ends of the beams 134, and the connection between the column 133 and the beam 134 can be achieved by driving and fixing the attachment caps 1341 onto the top ends of columns 133.

### Embodiment 8

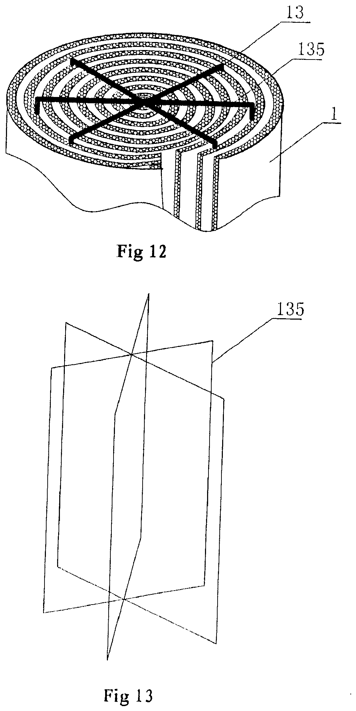

Figure 12 is the overall structural representation of embodiment 8 of present invention, and Figure 13 is the structural representation of the skeleton connection of embodiment 8 of present invention. As shown in Figures 12 and 13, in this embodiment, the skeleton 13 is composed of more than one framework 135. These frameworks 135 are set up between any two adjacent layers of the multilayer high-porosity material body 1, and the multiple frameworks 135 are mutually connected at their tops and bottoms, as shown in Figure 13.

The procedure for inserting the skeleton 13 includes: First, in the process of rolling up the high-porosity material 11, setting up multiple frameworks between any two adjacent layers of the multilayer material body, these frameworks can be separated from each other at intervals and in certain angle with respect to one another. In general, said certain angle is 45°-90°. Then, connecting the multiple frameworks 135 at their tops and bottoms, thus the inserted skeleton 13 is formed properly.

This skeleton structure may also be applied to the explosion-resistant unit bodies used in other oil storage/transport device to facilitate the connection between multiple unit bodies. The unit bodies may be connected by fixing together the vertex corner of each two adjacent frameworks 135 with a fixing clamp. Also featured by simple structure, light weight and low cost, this framework structure is suitable for practical application.

### Embodiment 9

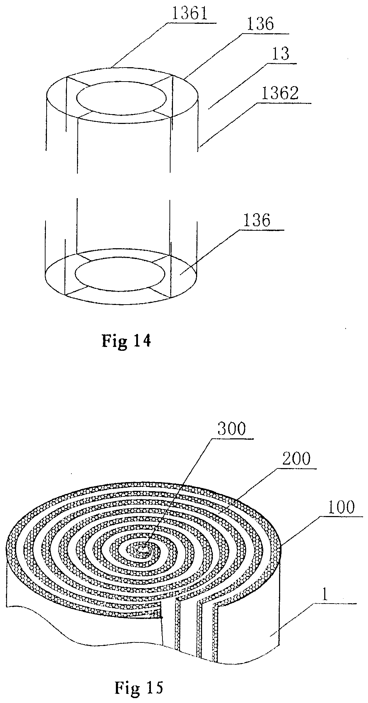

Figure 14 is the structural representation of the skeleton of embodiment 9 of present invention. As shown in Figure 14, in this embodiment, the skeleton 13 is composed of two parts, the upper and lower portion skeletons 136. These upper and lower portion skeletons 136 respectively include mutually connected end frames 1361 and insertion frames 1362. Said end frames 1361 are respectively set over the upper and lower end surfaces of the material body 1, and said insertion frames 1362 are inserted into the gap between any two adjacent layers of the multilayer material body 1. In this embodiment, the procedure for inserting the skeleton 13 includes: in the process of rolling up said high-porosity material 11, inserting the upper and lower portion skeletons 136 composed of mutually connected end frames 1361 and insertion frames 1362; said end frames 1361 are set over the upper and lower end surfaces of material body 1, and said insertion frames 1362 are inserted into the gaps between any two adjacent layers of the multilayer material body 1. In addition, when this structure form of skeleton 13 is adopted, it is not only possible to insert the skeleton in the process of rolling up the high-porosity material 11, but it is also possible to insert the skeleton 13 after completion of the rolling of the high-porosity material 11.

When this structure form of a skeleton is adopted, the total length of the insertion frames 1362 of the upper and lower portion skeletons 136 is just identical to the total height of the material body 1. For the purpose of saving material and reducing cost, the total length of upper and lower insertion frames 1362 may also be less than the height of material body 1, and the specific lengths of the upper portion skeleton and the lower portion skeleton may be adjusted according to the actual requirement.

### Embodiment 10

The above embodiments mainly provide the changes in the structure form of the skeleton 13. The explosion-proof material provided by the present invention may also be made of various materials. Figure 15 is the structural representation of the end surface of embodiment 10 of present invention. In this embodiment, the material of the multilayer high-porosity material 11 is a combination of a non-metallic material, a metallic material and a non-metallic material. As shown in Figure 15, this explosion-proof material is formed by the following procedures: through reticulating process, a flexible polyurethane foam material is made into a honeycomb structure, which is used as the core-body 300; The reticular metallic material 200 expanded by a metal-mesh expanding machine is enwound onto the core-body 300; Through such enwinding and superimposing of the reticular materials, a cylindrical semi-finished product is formed; Then, said semi-finished product is put in the die where polyurethane material will be foamed; After carrying out the foaming process of the polyurethane foam material, said semi-finished product is wrapped up with the coating layer 100 of the foamed polyurethane. After shape forming, said coated semi-finished product becomes the explosion-proof material composed of a combination of non-metallic material-reticular metallic material-non-metallic material. Both the non-metallic material of the core-body 300 and the non-metallic material of the outside coating layer 100 is polyurethane or polyether. The internal core-body 300 is a honeycomb like structure formed by flexible polyurethane foam material through reticulating process , and the non-metallic material of the outside coating layer 100 is polyurethane foam material being reticulated and shape-formed. The reticular metallic material 200 between two non-metallic materials is metallic material or alloy material, such as aluminum alloy, titanium alloy and copper alloy etc. The aluminum alloy material may be processed through traditional mechanical processing (For example, the metal-mesh expanding machine in the present invention), and special alloy materials may be processed through such processes as laser cutting, electron ray cutting and water-jet cutting etc. Different explosion-proof materials should be used according to the requirements of the different mediums and hazardous chemicals. As for this embodiment, the outside coating layer 100 is made from polyurethane material, the reticular metallic material 200 is aluminum alloy material and the core body 300 is made of polyurethane material. The adoption of such mixed materials brings about the following benefits: If the material body 1 is made from pure metal or alloy, they are more liable to generate scrapes over a long run, which in turn degrade the quality of the oil, due to the surging effect of the liquid oil product against the explosion-proof material in the container, which results in irregular and uneven stress on various parts of the explosion-proof material. When this mixed material is adopted as in this embodiment, because of the stable property of polyurethane, it is unlikely to generate scraps; at the same time, the honeycomb structured porosity structure of the internal reticular metallic material and the outside non-metallic material coating also generates the separating and explosion-resistance effect.

### Embodiment 11

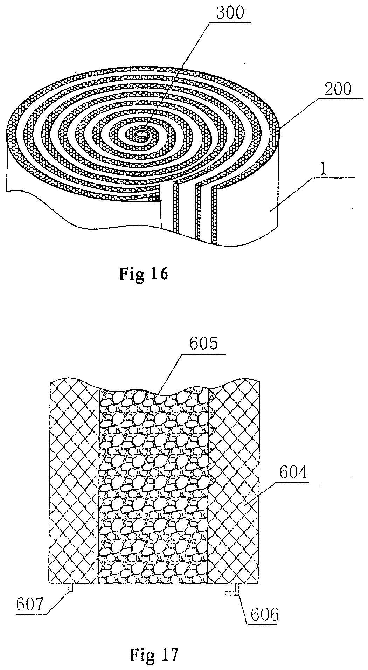

Figure 16 is the structural representation of the end surface of embodiment 11 of present invention; as shown in Figure 16, in this embodiment, this explosion-proof material is formed by the following procedures: the cylindrical skeleton, as the core-body 300, is formed out of flexible polyurethane foam material through reticulating process. Then, the reticular metallic material 200 expanded by the metal-mesh expanding machine is enwound over the surface of the core-body 300 until the mutually superimposing multilayer of the reticular metallic material 200 is formed, then the cylindrical explosion-proof material is obtained. This is a new type explosion-proof material composed of a non-metallic honeycomb structured material and a reticular metallic material. The difference between this embodiment and embodiment 10 is that, the roll of material body 1 is merely composed of two parts, namely the outside reticular metallic material 200 and core-body 300. The core-body 300 is made of non-metallic material, which is wrapped up with the reticular metallic material 200. Since the processing procedures of this embodiment are identical to those of embodiment 10, unnecessary details will not be given herein. In this embodiment, the combination of metallic and nonmetallic material are used as the materials for material body 1 again as in embodiment 10, and the outside reticular metallic wrapping material 200 can timely conduct out the static electricity and spark generated by the mutual friction or collision of the core-body 300, and thus safety and reliability are ensured.

### Embodiment 12

In this embodiment, the roll of the material body 1 is merely composed of two parts, the outside part and the core part. However, in contrast with embodiment 11, the outside wrapping of this embodiment is made from non-metallic material, and the core part is made of metallic material.

The outside wrapping of this embodiment is made of non-metallic material, so as to avoid the generation of metallic scraps as described in embodiment 10. In addition, embodiment 11 and embodiment 12 also have the following advantages. Compared with the material body primarily composed of metallic material or alloy material, embodiment 11 and embodiment 12 can largely reduce the production costs. As for the spark and static electricity that may easily occur due to friction between the non-metallic materials, the metallic material mixed with the non-metallic material can easily conduct out the spark and static electricity if they occur.

It is necessary to give additional remark that, for the explosion separating and resisting units provided by present invention, the materials stuffed within them can be various combinations of metallic materials and non-metallic materials; such as non-metallic skeleton inserted in the metallic material, metallic skeleton inserted in metallic material, metallic skeleton inserted in non-metallic material, non-metallic skeleton inserted in non-metallic material, metallic skeleton inserted in mixed material and non-metallic skeleton inserted in mixed material etc. However, it is necessary to note that the applicable non-metallic materials should be materials that may be easily foamed or expanded, such as polyether, poly - acid ester and polyurethane etc. At the same time, such non-metallic materials should not be liable to produce static electricity and spark under collision and friction. As for the metallic materials, titanium alloy, copper alloy and iron alloy may be adopted.

### Embodiment 13

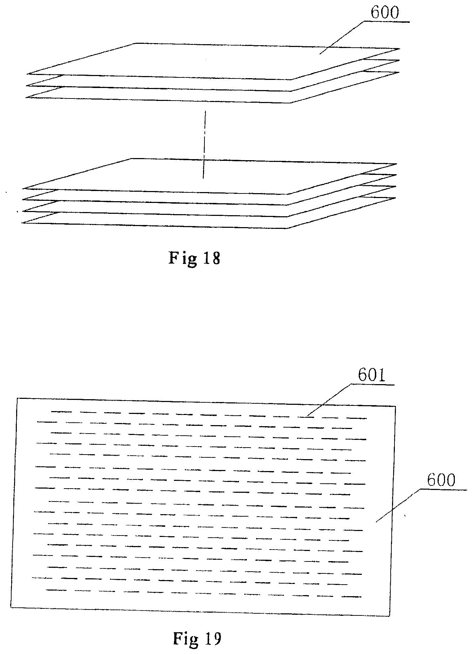

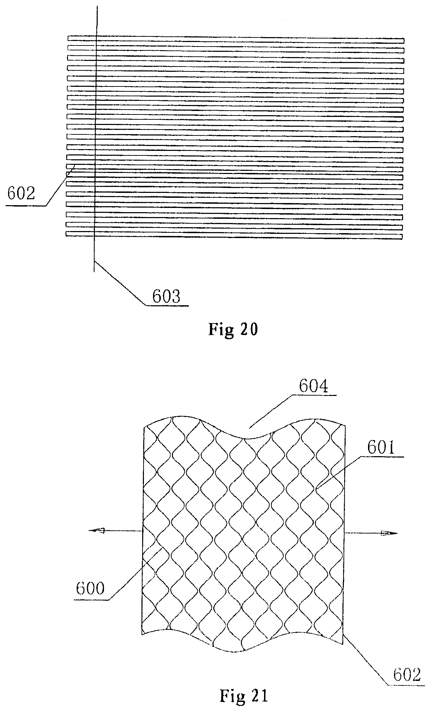

Figure 17 is the overall structural representation of embodiment 13 of present invention. As shown in Figure 17, the explosion-proof material provided by this embodiment includes a core-body 605, and a metal mesh 604 wound on its outside surface. The core-body 605 is made of expandable foam material. The processing method for the metal mesh 604 in this embodiment differs from that for the metal mesh expanded by metal-mesh expanding machine in previous embodiment. The metal mesh 604 in this embodiment has stronger rigidity and has better supporting effect. The specific processing method for this metal mesh 604 is shown in reference to Figures 18-21. Figure 18 is the overall schematic diagram of the bonding of the multilayer open-width foil material as shown in embodiment 13; as is shown, the bonding method is to mutually bond the upper and lower surfaces of any two adjacent open width metallic foil material 600 into a multilayer sheet. Figure 19 is the schematic diagram of setting up bonding points on each sheet of open-width foil material in embodiment 13; as shown in Figure 19, the bonding points 601 are set up at equal intervals in the transverse and longitudinal directions; and any two adjacent lines of the bonding points on the same foil material 600 are mutually staggered from each other. Figure 20 is the structural representation of the laminated material after being bonded and shows the cutting positions therewith; as shown in Fig. 20, the properly bonded multilayer open width metal foil is cut into an arrangement of slits602 in the same direction 603. Figure 21 is the structural representation of the metal mesh of embodiment 13 of present invention. As shown in Figure 21 , the properly cut slits arrangement 602 is expanded along the direction perpendicular to the cutting direction (the direction of arrow as shown in the Figure), so that the interval spaces of the foil material 600 between the bonding points 601 are expanded into voids, and thus the high-porosity metal mesh 604 is formed.

As shown in Figure 17, for the explosion-proof material in this embodiment, the core-body 605 is made from expandable foam material, which is compressible, and the metal mesh 604 is wound over its outside surface. The fabrication method of the metal mesh in this embodiment determines that its strength is superior to the strength of the metal mesh expanded by the metal-mesh expanding machine, so that the mesh can provide sound supporting effect. In addition, during the process of transporting this material body, it is also feasible to correspondingly set up, onto the ends of metal mesh 604 on both sides of the core-body 605, fixing devices 606 and 607, which is used to fix the metal mesh wrapping the compressed the core-body 605 so as to save space and provide convenience for transportation. When this explosion-proof device has been delivered to the destination, the fixing devices 606 and 607 can be opened, and the nonmetallic core-body 605 will recover its state, without affecting its installation, filling up and use.

In the end, it must be known that: the above embodiments are used to describe rather than to limit the present invention. Although detailed description of present invention is provided with reference to the preferred embodiments, a common technical person of this field should understand that any modification to or equivalent substitution of the present invention without going beyond the principle and scope of the present invention shall be covered by the scope of the claims of present invention.

## Claims

1. An explosion-proof material composed of a high-porosity material sheet (11), said high porosity material sheet (11) being rolled up into a multilayer material body (1) with one side edge (12) of it as center and along the direction perpendicular to this side edge (12), a skeleton (13) is inserted in the gaps between any two layers of the multilayer high-porosity material sheet (11) for fixing and supporting the material body (1), **characterized in that** said skeleton (13) is at least one of
formed by interweaving a carriage (131) with a stiffening ring (132), said stiffening ring (132) being located in the middle of the carriage (131) and fixed onto it, the shape of the skeleton (13) corresponding to the shape of material body (1),
composed of columns (133) and beams (134), said columns (133) being inserted in the multilayer high porosity materials (11) of the material body (1) and projecting out of the upper and lower end surfaces of the material body (1), said beams(134) being attached onto the projected end parts of the columns(133) on the upper and lower end surfaces of the material body (1),
composed of more than one framework (135), these frameworks (135) being set up in the multilayer high-porosity materials (11) connecting to one another at their top and bottom, and
composed of two parts, the upper portion skeleton and the lower portion skeleton (136), each including mutually connected end frames (1361) and insertion frames (1362), wherein said end frames (1361) being set on the upper and lower end surfaces of the material body (1), and said insertion frames (1362) being inserted into the gaps between any two adjacent layers of the multilayer high-porosity material (11) of the material body (1) for the purpose of fixing and supporting.

2. The explosion-proof material of claim 1, **characterized in that** said skeleton (13) is made of a elastic material.

3. The explosion-proof material of claim 1 or 2, **characterized in that** said skeleton (13) is a continuous skeleton.

4. The explosion-proof material of claim 1 or 2, **characterized in that** said skeleton (13) is a discontinuous skeleton.

5. The explosion-proof material of any one of claims 1 to 4, **characterized in that** said skeleton (13) is inserted in more than one positions.

6. The explosion-proof material of any one of claims 1 to 5, **characterized in that** said carriage (131) is undulated shape.

7. The explosion-proof material of any one of claims 1 to 5, **characterized in that** said carriage (131) is a rectangle framework.

8. The explosion-proof material of claim 1, **characterized in that** said material body (1) may be in the shape of rectangular parallelepiped, cubic or polygonal column.

9. The explosion-proof material of any one of claims 1 to 8, **characterized in that** said high-porosity material sheet (11) is made of metallic material, alloy material or materials obtained through metallic/non-metallic coating technology or their combination.

10. The explosion-proof material of any one of claims 1 to 9, **characterized in that** said skeleton (13) is made of metallic material, non-metallic material, alloy material or
materials obtained through metallic/non-metallic coating technology or their combination.

11. A processing method for the explosion-proof material according to claim 1, **characterized in that** the method comprises the following steps:
Step 1: Forming a grid-form semi-finished material through cutting an arrangement of slits on an open-width foil material sheet;
Step 2: Gradually expanding and stretching outwards both sides of the grid formed semi-finished material so as to obtain a high porosity material sheet (11);
Step 3: With one side edge (12) of this high-porosity material sheet (11) as the center, rolling up the material along the direction perpendicular to this side edge;
Step 4: During the process of rolling up the high-porosity material sheet (11), inserting the skeleton (13) into the gaps between any two adjacent layers of the material body, rolling up the material continually until it forms a cylinder with required diameter, cutting off the rest of the high-porosity material sheet (11) so that the cylinder-shaped explosion-proof material is obtained.

## Patentansprüche

1. Explosionssicheres Material zusammengesetzt aus einem hochporösen Materialblatt (11), wobei das hochporöse Materialblatt (11) in einen mehrschichtigen Materialkörper (1) aufgerollt ist, mit einer Seitenkante (12) als Mitte, und wobei entlang der Richtung senkrecht zu dieser Seitenkante (12) ein Gerippe in die Lücken zwischen irgendwelchen zwei Schichten des mehrschichtigen hochporösen Materialblatts (11) eingefügt sind, um den Materialkörper (1) zu befestigen und zu tragen, **dadurch gekennzeichnet, dass** das Gerippe (13) eines ist, das
durch Verweben eines Trägers (131) mit einem Versteifungsring (132) gebildet wird, wobei der Versteifungsring (132) in der Mitte des Trägers (131) liegt und darauf befestigt ist, wobei die Form des Gerippes (13) der Form des Materialkörpers (1) entspricht,
aus Säulen (133) und Streben (134) besteht, wobei die Säulen (133) in die mehrschichtigen hochporösen Materialien (11) des Materialkörpers (1) eingefügt sind und aus der oberen und unteren Endfläche des Materialkörpers (1) herausragen, wobei die Streben (134) auf den herausragenden Endteilen der Säulen (133) auf der oberen und unteren Endfläche des Materialkörpers (1) angebracht sind,
aus mehr als einem Rahmentragwerk (135) besteht, wobei diese Rahmentragwerke (135) in den vielschichtigen hochporösen Materialien (11) eingerichtet sind, die sich miteinander an ihrer Oberseite und Unterseite verbinden, und
aus zwei Teilen gebildet ist, dem Gerippe des oberen Abschnitts und dem Gerippe des unteren Abschnitts (136), die jeweils miteinander verbunden Endrahmen (1361) und einen Einfügerahmen (1362) aufweisen, wobei die Rahmen (1361) auf der oberen und unteren Endfläche des Materialkörpers (1) eingerichtet sind, und die Einfügerahmen (1362) in die Lücken zwischen beliebigen zwei benachbarten Schichten des vielschichtigen hochporösen Materials (11) des Materialkörpers (1) zum Zweck des Befestigens und Tragens eingefügt sind.

2. Explosionssicheres Material gemäß Anspruch 1, **dadurch gekennzeichnet, dass** das Gerippe (13) aus einem elastischen Material hergestellt ist.

3. Explosionssicheres Material gemäß Anspruch 1 oder 2, **dadurch gekennzeichnet, dass** das Gerippe (13) ein kontinuierliches Gerippe ist.

4. Explosionssicheres Material gemäß Anspruch 1 oder 2, **dadurch gekennzeichnet, dass** das Gerippe (13) ein diskontinuierliches Gerippe ist.

5. Explosionssicheres Material gemäß einem der Ansprüche 1 bis 4, **dadurch gekennzeichnet, dass** das Gerippe (13) in mehr als einer Position eingefügt ist.

6. Explosionssicheres Material gemäß einem der Ansprüche 1 bis 5, **dadurch gekennzeichnet, dass** der Träger (131) eine wellige Form hat.

7. Explosionssicheres Material gemäß einem der Ansprüche 1 bis 5, **dadurch gekennzeichnet, dass** der Träger (133) ein Rechteck-Rahmentragwerk ist.

8. Explosionssicheres Material gemäß Anspruch 1, **dadurch gekennzeichnet, dass** der Materialkörper (1) die Form einer Quader-, kubischen oder polygonalen Säule haben kann.

9. Explosionssicheres Material gemäß einem der Ansprüche 1 bis 8, **dadurch gekennzeichnet, dass** das hochporöse Materialblatt (11) aus einem metallischen Material, Legierungsmaterial oder Materialien hergestellt ist, die durch metallische/nicht metallische Beschichtungstechnologie oder ihre Kombinationen erhalten werden.

10. Explosionssicheres Material gemäß einem der Ansprüche 1 bis 9, **dadurch gekennzeichnet, dass** das Gerippe (13) aus einem metallischen Material, nicht metallischen Material, Legierungsmaterial hergestellt ist oder
aus Materialien, die durch metallische/nicht metallische Beschichtungstechnologie oder ihre Kombination erhalten werden.

11. Verarbeitungsverfahren für das explosionssichere Material gemäß Anspruch 1, **dadurch gekennzeichnet, dass** das Verfahren die folgenden Schritte umfasst:
1. Schritt: Bilden eines Gitterform-Halbfertigmaterials durch Schneiden einer Anordnung von Schlitzen auf einem Folien-Materialblatt mit offener Breite,
2. Schritt: allmähliches Aufdehnen und Strecken beider Seiten des Gitterform-Halbfertigmaterials, um ein hochporöses Materialblatt (11) zu erhalten,
3. Schritt: mit einer Seitenkante (12) dieses hochporösen Materialblatts (11) als die Mitte, Aufrollen des Materials entlang der Richtung senkrecht zu dieser Seitenkante,
4. Schritt: während des Aufrollprozess des hochporösen Materialblatts (11), Einfügen des Gerippes (13) in die Lücken zwischen zwei benachbarten Schichten des Materialkörpers, Aufrollen des Materials kontinuierlich, bis es einen Zylinder mit erforderlichem Durchmesser bildet, Abschneiden des Rests des hochporösen Materialblatts (11), so dass das zylinderförmige explosionssichere Material erhalten wird.

## Revendications

1. Matériau anti-explosion composé d'une feuille de matériau à haute porosité (11), ladite feuille de matériau à haute porosité (11) étant enroulée en un corps de matériau multicouche (1) avec un bord latéral (12) de cette dernière en tant que centre et le long de la direction perpendiculaire à ce bord latéral (12), un squelette (13) est inséré dans les espaces entre l'une quelconque de deux couches de la feuille de matériau à haute porosité multicouche (11) pour fixer et supporter le corps de matériau (1), **caractérisé en ce que** ledit squelette (13) est au moins l'un parmi :
formé en entrelaçant un support (131) avec un anneau raidisseur (132), ledit anneau raidisseur (132) étant positionné au centre du support (131) et fixé sur ce dernier, la forme du squelette (13) correspondant à la forme du corps de matériau (1),
composé de colonnes (133) et de poutres (134), lesdites colonnes (133) étant insérées dans les matériaux à haute porosité multicouches (11) du corps de matériau (1) et faisant saillie des surfaces d'extrémité supérieure et inférieure du corps de matériau (1), lesdites poutres (134) étant fixées sur les parties d'extrémité en saillie des colonnes (133) sur les surfaces d'extrémité supérieure et inférieure du corps de matériau (1),
composé de plus d'une ossature (135), ces ossatures (135) étant placées dans les matériaux à haute porosité multicouches (11) se raccordant entre eux au niveau de leur partie supérieure et de leur partie inférieure, et
composé de deux parties, le squelette de partie supérieure et le squelette de partie inférieure (136), chacun comprenant des bâtis d'extrémité (1361) et des bâtis d'insertion (1362) mutuellement raccordés, dans lequel lesdits bâtis d'extrémité (1361) étant placés sur les surfaces d'extrémité supérieure et inférieure du corps de matériau (1), et lesdits bâtis d'insertion (1362) étant insérés dans les espaces entre l'une quelconque de deux couches adjacentes du matériau à haute porosité multicouche (11) du corps de matériau (1) pour la fixation et le support.

2. Matériau anti-explosion selon la revendication 1, **caractérisé en ce que** ledit squelette (13) est réalisé avec un matériau élastique.

3. Matériau anti-explosion selon la revendication 1 ou 2, **caractérisé en ce que** ledit squelette (13) est un squelette continu.

4. Matériau anti-explosion selon la revendication 1 ou 2, **caractérisé en ce que** ledit squelette (13) est un squelette discontinu.

5. Matériau anti-explosion selon l'une quelconque des revendications 1 à 4, **caractérisé en ce que** ledit squelette (13) est inséré en plus d'une position.

6. Matériau anti-explosion selon l'une quelconque des revendications 1 à 5, **caractérisé en ce que** ledit support (131) a une forme ondulée.

7. Matériau anti-explosion selon l'une quelconque des revendications 1 à 5, **caractérisé en ce que** ledit support (131) est une ossature rectangulaire.

8. Matériau anti-explosion selon la revendication 1, **caractérisé en ce que** ledit corps de matériau (1) peut avoir la forme d'une colonne parallélépipède rectangulaire, cubique ou polygonale.

9. Matériau anti-explosion selon l'une quelconque des revendications 1 à 8, **caractérisé en ce que** ladite feuille de matériau à haute porosité (11) est réalisée avec un matériau métallique, un matériau ou des matériaux en alliage obtenus par la technologie de revêtement métallique/non métallique ou leur combinaison.

10. Matériau anti-explosion selon l'une quelconque des revendications 1 à 9, **caractérisé en ce que** ledit squelette (13) est réalisé avec un matériau métallique, un matériau non métallique, un matériau ou des matériaux en alliage obtenus par le biais de la technologie de revêtement métallique/non métallique ou leur combinaison.

11. Procédé de traitement pour un matériau anti-explosion selon la revendication 1, **caractérisé en ce que** le procédé comprend les étapes suivantes :
étape 1 : former un matériau semi-fini en forme de grille en découpant un agencement de fentes sur une feuille de matériau en feuille à largeur ouverte ;
étape 2 : expanser et étirer progressivement vers l'extérieur les deux côtés du matériau semi-fini en forme de grille afin d'obtenir une feuille de matériau à haute porosité (11) ;
étape 3 : avec un bord latéral (12) de cette feuille de matériau à haute porosité (11) en tant que centre, enrouler le matériau le long de la direction perpendiculaire à ce bord latéral ;
étape 4 : pendant le processus d'enroulement de la feuille de matériau à haute porosité (11), insérer le squelette (13) dans les espaces entre l'une quelconque de deux couches adjacentes du corps de matériau, enrouler le matériau de manière continue jusqu'à ce qu'il forme un cylindre avec un diamètre requis, couper le reste de la feuille de matériau à haute porosité (11) de sorte que le matériau anti-explosion en forme de cylindre est obtenu.
